# EUROPEAN PATENT APPLICATION

(11) **EP 4 270 693 A1**
(43) Date of publication of application: **01.11.2023**
(21) Application number: 21910547.5
(22) Date of filing: 15.12.2021
(51) Int. Cl.: H02G 1/14

(54) **DRAIN WIRE STRAIGHTENING DEVICE AND DRAIN WIRE STRAIGHTENING METHOD**

(30) Priority: 24.12.2020 JP 2020215191
(71) Applicant: ShinMaywa Industries, Ltd., Takarazuka-shi, Hyogo 665-8550 (JP)
(72) Inventor: TAKAHASHI, Yoshiki, Takarazuka-shi, Hyogo 665-8550 (JP); FUJISAWA, Naoki, Takarazuka-shi, Hyogo 665-8550 (JP); SHIMMURA, Ayako, Takarazuka-shi, Hyogo 665-8550 (JP); MATSUMOTO, Miyuki, Takarazuka-shi, Hyogo 665-8550 (JP)
(74) Representative: Grünecker Patent- und Rechtsanwälte PartG mbB
(86) International application number: PCT/JP2021/046376
(87) International publication number: WO 2022/138399

(57) **Abstract**

A drain wire correcting device 10 includes: a retention device 20 configured to retain a sheathed portion 1a of a multi-core cable 1; gripping members 41, 42 configured to grip a drain wire 2 on an axis Ax; a moving device 60 configured to move at least one of the multi-core cable 1 and the gripping members 41, 42 along the axis Ax; and a rotating device 70 configured to rotate at least one of the multi-core cable 1 and the gripping members 41, 42 around the axis Ax. The drain wire correcting device 10 executes a squeeze control of moving the gripping members 41, 42 along the axis Ax while the gripping members 41, 42 are in contact with the drain wire 2, thereby squeezing the drain wire 2 toward a distal end side, and executes, after the squeeze control, a rotation control causing the gripping members 41, 42 to grip the drain wire 2 with a gripping force increased from that in the squeeze control and rotating the gripping members 41, 42 around the axis Ax.

## Description

### TECHNICAL FIELD

The present invention relates to a drain wire correcting device and a drain wire correcting method.

### BACKGROUND ART

Multi-core cables have been known in the art, including a drain wire and a plurality of core wires covered by a sheath. When processing a multi-core cable, the drain wire and the plurality of core wires are normally separated and processed separately. For example, PTL 1 discloses a heat-shrink tube installment device having a carrying section for inserting a drain wire into a heat-shrink tube and a heating unit for heating the heat-shrink tube.

Before performing a process such as insertion into a heat-shrink tube, for example, for a drain wire composed of a plurality of strands, it is desirable to rectify the shape of the drain wire straight and then organize the strands so that they do not come apart (hereinafter referred to as correcting the drain wire). If the drain wire is not desirably corrected, post-processing of the drain wire such as insertion into the heat-shrink tube becomes difficult. Therefore, devices for correcting the drain wire have been devised in the art. For example, PTL 2 discloses a device for stretching the drain wire sandwiched between a pair of gripping members (brushes) and, from a middle point, rotating the gripping members around the axis of the drain wire.

### CITATION LIST

### PATENT LITERATURE

PTL 1: JPA 2016-123215
PTL 2: JP A S64-81608

### SUMMARY OF INVENTION

### TECHNICAL PROBLEM

The present inventors have confirmed that by gripping the drain wire by the gripping member and moving the gripping member toward the distal end side of the drain wire, the strands of the drain wire can be brought together and the drain wire can be shaped straight. By thereafter rotating the gripping member around the axis of the drain wire, it is possible to twist the drain wire. Note however that if the gripping force of the gripping member is strong, the drain wire is pulled too strongly during the movement of the gripping member, and problems such as the strands of the drain wire being cut are likely to occur. On the other hand, if the gripping force of the gripping member is weakened, when twisting the drain wire by rotating the gripping member, the drain wire is likely to slip against the gripping member so that the drain wire is not twisted sufficiently. Thus, even if the drain wire is sandwiched and stretched by the gripping member and the holding member is rotated around the axis of the drain wire from a middle point, the drain wire is not always corrected desirably.

The present invention has been made in view of these points, and an object thereof is to provide a drain wire correcting device that can correct the drain wire desirably. It is also an object to provide a drain wire correcting method with which it is possible to correct the drain wire desirably.

### SOLUTION TO PROBLEM

A first drain wire correcting device according to the present invention includes: a retention device configured to retain a sheathed portion of a multi-core cable, the multi-core cable including the sheathed portion covered with a sheath and a drain wire exposed from the sheathed portion; a gripping member configured to be capable of gripping the drain wire on a predetermined axis; a drive device configured to drive the gripping member so as to grip or release the drain wire; a moving device configured to move at least one of the multi-core cable retained by the retention device and the gripping member along the axis; a rotating device configured to rotate at least one of the multi-core cable retained by the retention device and the gripping member around the axis; and a controller configured to control the drive device, the moving device and the rotating device. The controller is configured to execute a squeeze control, and a rotation control after the squeeze control. The squeeze control is a control of moving the gripping member along the axis relative to the multi-core cable while the gripping member is in contact with the drain wire, thereby squeezing the drain wire toward a distal end side. The rotation control is a control of causing the gripping member to grip the drain wire with a gripping force increased from that in the squeeze control, and rotating the gripping member around the axis relative to the sheathed portion.

With the drain wire correcting device described above, in the squeeze control, the gripping member is caused to move toward the distal end side of the drain wire while the gripping member is in contact with the drain wire. Thus, it is possible to organize the strands of the drain wire and shape the drain wire straight along the predetermined axis. Moreover, in the rotation control performed after the squeeze control, the gripping member is caused to grip the drain wire with a gripping force increased from that in the squeeze control, and the gripping member is rotated relative to the sheathed portion of the multi-core cable. In the rotation control, the drain wire is gripped more strongly than in the squeeze control, and it is therefore possible to tightly twist the drain wire by the rotation control.

In the squeeze control, the gripping member either grips the drain wire more weakly than in the rotation control, or is merely in contact with the drain wire without gripping the drain wire. Therefore, in the squeeze control, even if the gripping member is moved toward the distal end side of the drain wire, the drain wire is not pulled so strongly. Therefore, the strands of the drain wire are less likely to break. As a result, with the drain wire correcting device described above, it is possible to more desirably correct the drain wire.

In one preferred embodiment of the first drain wire correcting device, the controller is configured to, in the squeeze control, cause the gripping member to grip the drain wire with a gripping force weaker than that in the rotation control.

With the drain wire correcting device described above, in the squeeze control, the drain wire is gripped by the gripping member, and is therefore pulled toward the distal end side. Therefore, it is possible to more desirably shape the drain wire straight.

In one preferred embodiment of the first drain wire correcting device, the controller is configured to, in the rotation control, drive the moving device so that the gripping member pulls the drain wire toward the distal end side of the drain wire.

With the drain wire correcting device described above, in the rotation control, the drain wire is twisted while being pulled toward the distal end side, it is possible to more desirably shape the drain wire straight. Note that at this point, the gripping member may be moving or may not be moving toward the distal end side of the drain wire.

In one preferred embodiment of the first drain wire correcting device, the controller is configured to, after the rotation control, execute a release control. The release control is a control of causing the gripping member to grip the drain wire with a gripping force weaker than that in the rotation control, rotating the gripping member around the axis relative to the sheathed portion, and moving the gripping member along the axis toward the distal end side of the drain wire, thereby releasing the gripping member from the drain wire.

With the drain wire correcting device described above, by the release control of moving the gripping member while rotating the gripping member, it is possible to twist also a portion of the drain wire that has not been twisted in the rotation control (the grip portion that is gripped by the gripping member and a portion on the distal end side relative to the grip portion). Moreover, since the release control is performed until the gripping member comes off the drain wire, the drain wire is twisted up to the distal end by the release control. The gripping force of the gripping member in the release control is weaker than that in the rotation control. Therefore, it is also possible to suppress the problem of the strands of the drain wire being broken.

In one preferred embodiment of the drain wire correcting device, a moving speed of the gripping member relative to the drain wire in the squeeze control is faster than a moving speed of the gripping member relative to the drain wire in the release control.

In the rotation control, in order to twist the drain wire an intended number of times, it is preferred that the rotation speed of the gripping member is associated with the moving speed thereof relative to the drain wire. However, such association is not necessary in the squeeze control. With the drain wire correcting device described above, in the squeeze control, in which there is no need to associate together the rotation speed and the moving speed of the gripping member, the moving speed of the gripping member can be increased so as to save the amount of time required for correcting the drain wire.

In one preferred embodiment of the first drain wire correcting device, the controller executes the rotation control while the gripping member is positioned at the distal end portion of the drain wire.

With the drain wire correcting device described above, the drain wire is twisted while much of the drain wire has been squeezed. Thus, it is possible to more desirably correct the drain wire.

In one preferred embodiment of the first drain wire correcting device, the controller starts the squeeze control while the gripping member is positioned at a root portion of the drain wire.

With the drain wire correcting device described above, since the squeeze control starts from the root portion of the drain wire, where the strands have been relatively organized already before the correction, it is possible to desirably organize the drain wire.

In one preferred embodiment of the first drain wire correcting device, the gripping member includes: a first clamp including a first gripping portion that is notched in a shape corresponding to a cross-sectional shape of the drain wire; and a second clamp including a second gripping portion that is notched in a shape corresponding to the cross-sectional shape of the drain wire and is arranged so as to face the first gripping portion. The drive device is configured to move the first clamp and the second clamp toward or away from each other.

With the drain wire correcting device described above, the drain wire is gripped by a first gripping portion and a second gripping portion that are notched in a shape corresponding to the cross-sectional shape of the drain wire. Therefore, the drain wire is easily organized in the squeeze control, and the drain wire can be easily gripped by the gripping member in the rotation control.

In one preferred embodiment of the first drain wire correcting device, in the squeeze control, the controller may rotate the gripping member around the axis relative to the sheathed portion while moving the gripping member toward the distal end side of the drain wire while the gripping member is in contact with the drain wire.

A second drain wire correcting device according to the present invention includes: a retention device configured to retain a sheathed portion of a multi-core cable, the multi-core cable including the sheathed portion covered with a sheath and a drain wire exposed from the sheathed portion; a squeezing member configured to be in contact with the drain wire so as to surround the drain wire; a gripping member configured to be capable of gripping the drain wire; a drive device configured to drive the gripping member so as to grip or release the drain wire; a moving device configured to move at least one of the multi-core cable retained by the retention device and the squeezing member so that the squeezing member and the sheathed portion move away from each other; a rotating device configured to rotate at least one of the multi-core cable retained by the retention device and the gripping member around a predetermined axis; and a controller configured to control the drive device, the moving device and the rotating device. The controller is configured to execute a squeeze control, and a rotation control after the squeeze control. The squeeze control is a control of moving the squeezing member relative to the multi-core cable while the squeezing member is in contact with the drain wire, thereby squeezing the drain wire toward a distal end side. The rotation control, after the squeeze control, is a control of causing the gripping member to grip the drain wire, and rotating the gripping member around the axis relative to the sheathed portion.

With the drain wire correcting device described above, in the squeeze control, the squeezing member is moved toward the distal end side of the drain wire while the squeezing member is in contact with the drain wire. Therefore, it is possible to organize the strands of the drain wire, and shape the drain wire straight. Moreover, in the rotation control performed after the squeeze control, the drain wire is gripped by the gripping member, and the gripping member is rotated relative to the sheathed portion of the multi-core cable. In the rotation control, the drain wire is gripped by the gripping member, and it is therefore possible to tightly twist the drain wire by the rotation control.

In one preferred embodiment of the second drain wire correcting device, the squeezing member is configured to be capable of gripping the drain wire. The drain wire correcting device further includes another drive device configured to drive the squeezing member so as to grip or release the drain wire based on a control of the controller. In the squeeze control, the controller controls the other drive device so as to cause the squeezing member to grasp the drain wire with a gripping force weaker than the gripping force by which the gripping member grips the drain wire in the rotation control.

With the drain wire correcting device described above, functions and effects similar to those of the embodiment where the drain wire is gripped by the gripping member in the squeeze control can be realized, of those of one preferred embodiment of the first drain wire correcting device.

In one preferred embodiment of the second drain wire correcting device, the drain wire correcting device further includes another moving device configured to move at least one of the multi-core cable retained by the retention device and the gripping member along the axis. The controller is configured to, after the rotation control, execute a release control of causing the gripping member to grip the drain wire with a gripping force weaker than that in the rotation control, rotating the gripping member around the axis relative to the sheathed portion, and driving the other moving device to move the gripping member along the axis toward the distal end side of the drain wire, thereby releasing the gripping member from the drain wire.

With the drain wire correcting device described above, functions and effects similar to the release control of the first drain wire correcting device can be realized.

A drain wire correcting method according to the present invention includes: a first step of retaining a sheathed portion of a multi-core cable, the multi-core cable including the sheathed portion covered with a sheath and a drain wire exposed from the sheathed portion; a second step of causing a gripper, capable of gripping the drain wire, to come into contact with an outer circumference of the drain wire; a third step, after the second step, of moving at least one of the retained multi-core cable and the gripper while the gripper is in contact with the outer circumference of the drain wire, thereby moving the gripper toward a distal end side of the drain wire; a fourth step, after the third step, of causing the gripper to grip the drain wire with a gripping force of the gripper increased from that in the third step; and a fifth step, after the fourth step, of rotating at least one of the retained multi-core cable and the gripper around an axis of the drain wire while the drain wire is gripped by the gripper, thereby rotating the gripper around the axis of the drain wire relative to the sheathed portion.

With the drain wire correcting method described above, functions and effects similar to those of the first drain wire correcting device and the second drain wire correcting device can be realized.

In one preferred embodiment of the drain wire correcting method according to the present invention, in the second step, the drain wire is gripped by the gripper with a gripping force weaker than that in the fourth step and the fifth step.

With the drain wire correcting method described above, functions and effects similar to those of the embodiment where the drain wire is gripped by the gripping member in the squeeze control can be realized, of those of preferred embodiments the first drain wire correcting device and the second drain wire correcting device.

In one preferred embodiment of the drain wire correcting method according to the present invention, the method further includes: a sixth step, after the fifth step, of gripping the drain wire by the gripper with a gripping force weaker than the gripping force in the fourth step and the fifth step; and a seventh step, after the sixth step, of rotating at least one of the retained multi-core cable and the gripper while the drain wire is gripped by the gripper around the axis of the drain wire, thereby rotating the gripper around the axis of the drain wire relative to the sheathed portion, and moving at least one of the retained multi-core cable and the gripper in an axial direction of the drain wire to move the gripper toward the distal end side of the drain wire, thereby releasing the gripper from the drain wire.

With the drain wire correcting method described above, functions and effects similar to those of the embodiment where the release control is executed can be realized, of those of preferred embodiments the first drain wire correcting device and the second drain wire correcting device.

### EFFECTS OF INVENTION

With the drain wire correcting devices or the drain wire correcting method of the present invention, it is possible to correct the drain wire more desirably.

### BRIEF DESCRIPTION OF DRAWINGS

FIG. **1** is a perspective view of a drain wire correcting device according to an embodiment.
FIG. **2** is a left side view of the drain wire correcting device.
FIG. **3** is a perspective view of a first clamp jaw and a second clamp jaw.
FIG. **4** is a cross-sectional view of the main part of the drain wire correcting device immediately before starting to correct the drain wire.
FIG. **5** is a cross-sectional view of the main part of the drain wire correcting device at the start of a squeeze control.
FIG. **6** is a cross-sectional view of the main part of the drain wire correcting device at the end of a squeeze control.
FIG. **7** is a cross-sectional view of the main part of the drain wire correcting device during a rotation control.
FIG. **8** is a cross-sectional view of the main part of the drain wire correcting device at the start of a release control.
FIG. **9** is a cross-sectional view of the drain wire correcting device at the end of a release control.
FIG. **10** is a perspective view of the drain wire correcting device divided into a squeeze device and a twist device.

### DESCRIPTION OF EMBODIMENTS

### [Configuration of drain wire correcting device]

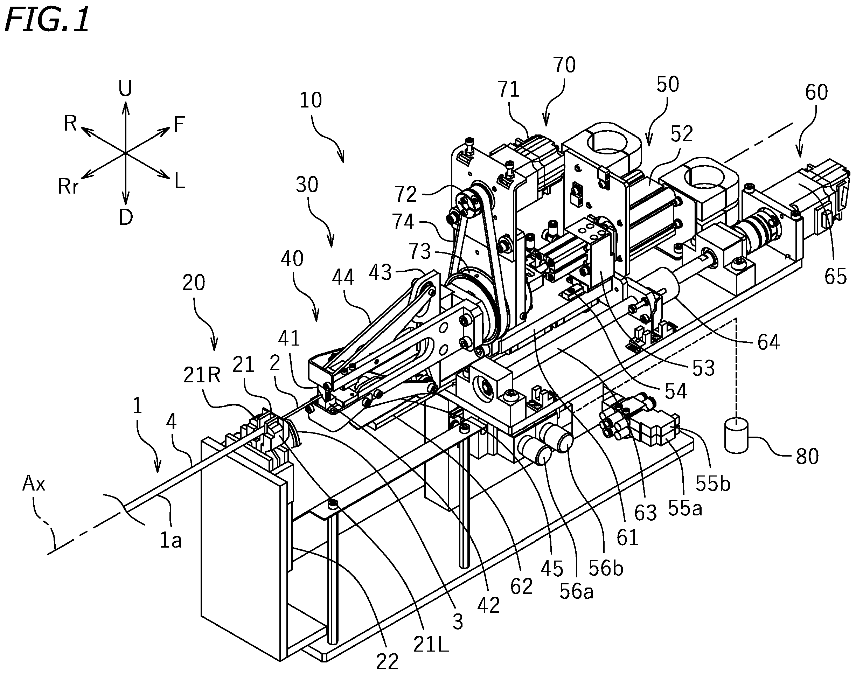

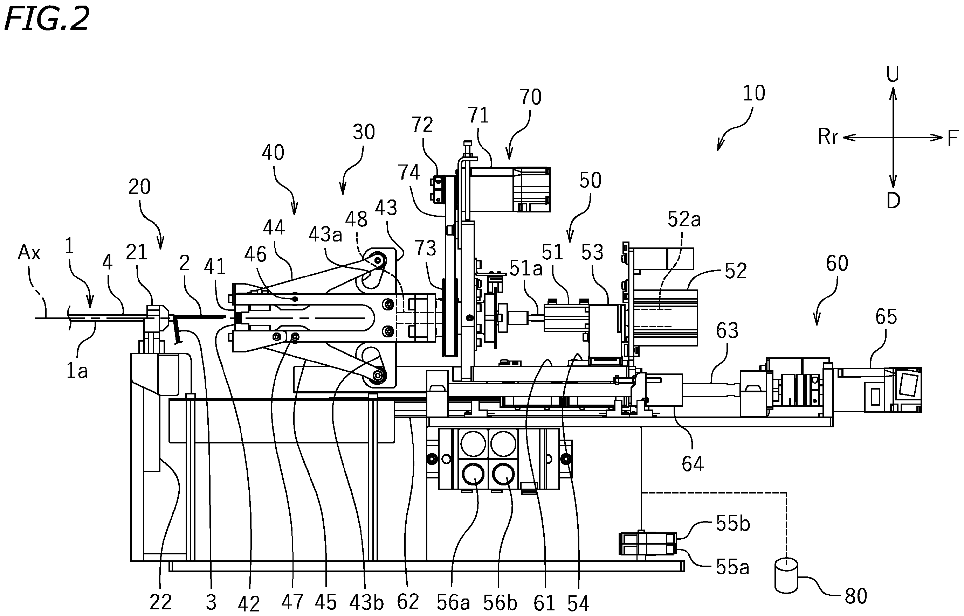

An embodiment of the present invention will now be described with reference to the drawings. FIG. **1** is a perspective view of a drain wire correcting device **10** according to one embodiment. FIG. **2** is a left side view of the drain wire correcting device **10**. The drain wire correcting device **10** according to the present embodiment is a device for correcting a drain wire **2** of a multi-core cable **1**. Here, "correcting the drain wire **2**" means rectifying the drain wire **2** composed of a plurality of metal strands straight and then organize the metal strands so that they do not come apart. Here, the drain wire correcting device **10** is configured to rectify the drain wire **2** straight and then twist the drain wire **2** so that the metal strands do not come apart. The multi-core cable **1** is an electric wire including the drain wire **2**, a plurality of core wires **3** and a shield (not shown) covered by a sheath **4**. The plurality of core wires **3** are used, for example, as signal wires for transmitting electrical signals. The shield, not shown, is a conductor that shields the core wires **3** from external noise. The shield covers the outside of the plurality of core lines **3**. The drain wire **2** is electrically connected to the shield. While in use, the drain wire **2** is grounded, thereby grounding the shield. As described above, the drain wire **2** is composed of a plurality of strands and is not sheathed by an insulator. The plurality of core wires **3** and the drain wire **2** are twisted together inside the shield. The shield is further covered by the insulator sheath **4**.

Before being mounted in the drain wire correcting device **10**, the multi-core cable **1** is subjected to a process of stripping the sheath **4** at the end, untwisting the plurality of core wires **3** and the drain wire **2** twisted together, and separating the drain wire **2** and the core wires **3**. Hereafter, unless otherwise specified, the exposed portion of the drain wire **2** exposed from the sheath **4** will be referred to simply as the drain wire **2** and the exposed portions of the plurality of core wires **3** exposed from the sheath **4** will be referred to simply as the core wires **3**. As shown in FIG. **1** and FIG. **2**, here, the drain wire **2** and the core wires **3** are separated from each other by bending the plurality of core wires **3** from the axial direction of the multi-core cable **1**. Here, the axial direction of the drain wire **2** coincides with the axial direction of a portion of the multi-core cable **1** covered with the sheath **4** (hereinafter referred to also as the sheathed portion **1a**). Note however that the axial direction of the drain wire **2** does not need to coincide with the axial direction of the sheathed portion **1a**.

As shown in FIG. **1** and FIG. **2**, the drain wire correcting device **10** includes a retention device **20**, a gripping device **30**, a moving device **60**, a rotating device **70** and a controller **80**. The retention device **20** is configured to retain the sheathed portion **1a** of the multi-core cable **1**. As shown in FIG. **1**, the retention device **20** includes a retention clamp **21** and an actuator **22**. The retention clamp **21** includes a pair of retention jaws **21L** and **21R**. The actuator **22** drives the retention jaws **21L** and **21R** toward each other or away from each other. The multi-core cable **1** is retained by being sandwiched between the retention jaws **21L** and **21R**. The multi-core cable **1** is released when the retention jaws **21L** and **21R** move away from each other.

Note that, in the following description, the side of the multi-core cable **1** in the axial direction on which the drain wire **2** is exposed will be referred to as the distal end side of the multi-core cable **1**. The end portion of the drain wire **2** on the distal end side of the multi-core cable **1** is referred to as the distal end of the drain wire **2**. In the following, the distal end side of the multi-core cable **1** as retained by the retention device **20** will be referred to as the forward side of the drain wire correcting device **10**, and leftward and rightward as viewed from the front side will be referred to as the leftward side and the rightward side, respectively, of the drain wire correcting device **10**. In the drawings, F, Rr, L, R, U and D represent front, rear, left, right, up and down of the drain wire correcting device **10**, respectively. Note however that these directions are for convenience of explanation and do not in any way limit how the drain wire correcting device **10** is installed, etc.

The gripping device **30** is a mechanism for gripping the drain wire **2** when correcting the drain wire **2**. The gripping device **30** is arranged forward of the retention device **20**. As shown in FIG. **1**, the gripping device **30** includes a gripping clamp **40** and a drive device **50**. The gripping clamp **40** includes a first clamp jaw **41** and a second clamp jaw **42** configured to be capable of gripping the drain wire **2**. The drive device **50** drives the first clamp jaw **41** and the second clamp jaw **42** so as to grip or release the drain wire **2**.

As will be later described in detail, the main part of the gripping clamp **40**, including the first clamp jaw **41** and the second clamp jaw **42**, is configured by the rotating device **70** to rotate around a predetermined axis **Ax**. This axis **Ax** will be hereinafter referred to also as the axis **Ax** of the gripping clamp **40** or simply as the axis **Ax**. As will also be later described in detail, the direction of extension of the axis **Ax** of the gripping clamp **40** is also the direction of movement of the gripping clamp **40** by the moving device **60**. As shown in FIG. **2**, in the present embodiment, the axis **Ax** of the gripping clamp **40** coincides with the axis of the sheathed portion **1a** of the multi-core cable **1** retained by the retention device **20**. The axis **Ax** also coincides with the axis of the drain wire **2** before being corrected. Note however that the axis **Ax** of the gripping clamp **40** does not need to coincide with the axis of the sheathed portion **1a** of the multi-core cable **1** and the drain wire **2** before being corrected.

As shown in FIG. **2**, the gripping clamp **40** includes the first clamp jaw **41**, the second clamp jaw **42**, a cam plate **43**, a first link member **44**, a second link member **45**, a first rotation axis **46**, a second rotation axis **47** and a piston rod **48**. The gripping clamp **40** is configured so that when the piston rod **48** is moved in the front-rear direction by the drive device **50**, the first clamp jaw **41** and the second clamp jaw **42** move closer to each other or away from each other.

As shown in FIG. **2**, the front end of the piston rod **48** is connected to the drive device **50** and the rear end thereof is connected to the cam plate **43**. The piston rod **48** is moved in the front-rear direction by the drive device **50**. This causes the cam plate **43** to move in the front-rear direction.

As shown in FIG. **1**, the cam plate **43** is configured to be in a plate shape. The cam plate **43** extends in the radial direction of the gripping clamp **40** and the front-rear direction. The cam plate **43** includes a pair of long holes **43a** and **43b**. The first long hole **43a** and the second long hole **43b** are through holes extending through the cam plate **43** in the left-right direction. As shown in FIG. **2**, the first long hole **43a** and the second long hole **43b** are symmetrical with respect to the axis **Ax**. The first long hole **43a** and the second long hole **43b** each extend outward in the radial direction of the gripping clamp **40** as it moves away from the retention device **20** (here, toward the front side of the drain wire correcting device **10**) with respect to the direction of extension of the axis **Ax**.

The first link member **44** and the second link member **45** are provided rearward relative to the cam plate **43** (between the cam plate **43** and the retention device **20**). The first link member **44** and the second link member **45** are engaged with the first long hole **43a** and the second long hole **43b**, respectively. The front end portion of the first link member **44** is pivotably engaged with the first long hole **43a**. The center portion of the first link member **44** in the front-rear direction is rotatably supported by the first rotation axis **46** extending in the left-right direction. Similarly, the front end portion of the second link member **45** is pivotably engaged with the second long hole **43b**. The center portion of the second link member **45** in the front-rear direction is rotatably supported by the second rotation axis **47** extending in the left-right direction.

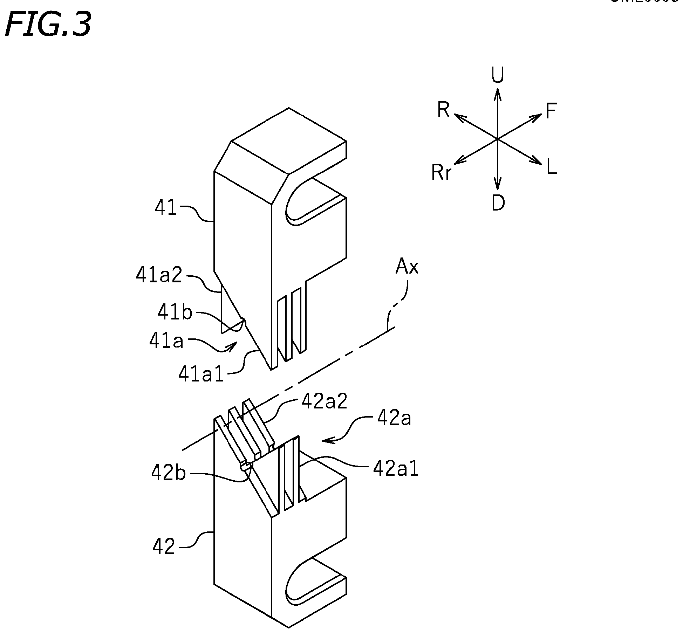

The first clamp jaw **41** and the second clamp jaw **42** are provided at the rear end portions of the first link member **44** and the second link member **45**, respectively. The first clamp jaw **41** and the second clamp jaw **42** face each other across the axis **Ax** of the gripping clamp **40**. The first clamp jaw **41** and the second clamp jaw **42** are configured to mesh with each other when they come close to each other by being driven the drive device **50**. FIG. **3** is a perspective view of the first clamp jaw **41** and the second clamp jaw **42**. FIG. **3** does not show members other than the first clamp jaw **41** and the second clamp jaw **42**. As shown in FIG. **3**, the first clamp jaw **41** includes a first meshing portion **41a** that meshes with the second clamp jaw **42**. The first meshing portion **41a** includes a plurality of generally triangular comb teeth **41a1** arranged with each other in the front-rear direction, and a plurality of generally triangular comb teeth **41a2** provided adjacent to the plurality of comb teeth **41a1** in the left-right direction and arranged with each other in the front-rear direction. As viewed in the front-rear direction, the comb teeth **41a1** and the comb teeth **41a2** are arranged so that their oblique sides face each other. The comb teeth **41a1** and the comb teeth **41a2** are positioned so as to alternate with each other in the front-rear direction.

The second clamp jaw **42** includes a second meshing portion **42a** that meshes with the first meshing portion **41a** of the first clamp jaw **41**. The second meshing portion **42a** also includes a plurality of generally triangular comb teeth **42a1** arranged with each other in the front-rear direction and a plurality of generally triangular comb teeth **42a2** provided adjacent to the plurality of comb teeth **42a1** in the left-right direction and arranged with each other in the front-rear direction. As viewed in the front-rear direction, the comb teeth **42a1** and the comb teeth **42a2** are arranged so that their oblique sides face each other. The comb teeth **42a1** and the comb teeth **42a2** are positioned so as to alternate with each other in the front-rear direction. The comb teeth **42a1** of the second clamp jaw **42** are arranged so as to alternate with the facing comb teeth **41a1** of the first clamp jaw **41**. The comb teeth **42a2** of the second clamp jaw **42** are arranged so as to alternate with the facing comb teeth **41a2** of the first clamp jaw **41**. Therefore, the first clamp jaw **41** and the second clamp jaw **42** mesh with each other when they come close to each other by being driven by the drive device **50**.

The first clamp jaw **41** includes a first gripping portion **41b** that is notched in a shape corresponding to the cross-sectional shape of the drain wire **2**. Here, the first gripping portion **41b** is a generally semicircular notch corresponding to the radius of the drain wire **2** as viewed in the front-rear direction. The first gripping portion **41b** is formed where the oblique sides of the comb teeth **41a1** and the oblique sides of the comb teeth **41a2** intersect with each other as viewed in the front-rear direction. The first gripping portion **41b** is provided so as to penetrate through the first meshing portion **41a** in the front-rear direction.

The second clamp jaw **42** includes a second gripping portion **42b** that is notched in a shape corresponding to the cross-sectional shape of the drain wire **2** and arranged so as to face the first gripping portion **41b**. The second gripping portion **42b** is also notched in a semicircular shape corresponding to the radius of the drain wire **2** as viewed in the front-rear direction. The second gripping portion **42b** is formed where the oblique sides of the comb teeth **42a1** and the oblique side of the comb teeth **42a2** intersect with each other as viewed in the front-rear direction. The second gripping portion **42b** is provided so as to penetrate through the second meshing portion **42a** in the front-rear direction. Therefore, with the first clamp jaw **41** and the second clamp jaw **42** meshed with each other, the first gripping portion **41b** and the second gripping portion **42b** together form a generally cylindrical gripping portion corresponding to the diameter of the drain wire **2**. The axis of the gripping portion formed when the first gripping portion **41b** and the second gripping portion **42b** mesh with each other coincides with the center of rotation of the gripping clamp **40**, i.e., the axis **Ax** of the gripping clamp **40**. Therefore, when the first clamp jaw **41** and the second clamp jaw **42** mesh with each other, the drain wire **2** is gripped on the axis **Ax** of the gripping clamp **40**.

As shown in FIG. **2**, the drive device **50** is provided forward relative to the gripping clamp **40**. The drive device **50** is connected to the front end portion of the piston rod **48** of the gripping clamp **40**, and is configured to move the piston rod **48** in the front-rear direction. As shown in FIG. **2**, the drive device **50** includes a first cylinder **51**, a second cylinder **52**, a support base **53** for the first cylinder **51**, a linear guide **54**, solenoid valves **55a** and **55b** provided in the air supply path, not shown, and pressure reducing valves **56a** and **56b** provided also in the air supply path.

The first cylinder **51** is the first actuator of the drive device **50**. The first cylinder **51** is herein an air cylinder with a cylinder rod **51a** that extends and retracts in the front-rear direction. Compressed air is supplied to the first cylinder **51** from an air supply path (not shown) for the first cylinder **51**. The compressed air supplied or discharged causes the cylinder rod **51a** of the first cylinder **51** to extend and retract. The supply or discharge of compressed air to the first cylinder **51** is controlled by the solenoid valve **55a** provided in the air supply path. The rear end portion (the distal end portion) of the cylinder rod **51a** is connected to the front end portion of the piston rod **48**. As the first cylinder **51** extends the cylinder rod **51a**, the piston rod **48** is pushed rearward.

The first cylinder **51** is supported by a support base **53**. The support base **53** is slidably engaged with the linear guide **54**. The linear guide **54** extends in the front-rear direction. The first cylinder **51** is configured to be movable in the front-rear direction along the linear guide **54**.

The second cylinder **52** is arranged forward relative to the support base **53**. The second cylinder **52** is the second actuator of the drive device **50**. Also the second cylinder **52** is herein an air cylinder. Here, the second cylinder **52** is an air cylinder with a larger diameter than the first cylinder **51**. The second cylinder **52** includes a cylinder rod **52a** that extends and retracts in the front-rear direction. Compressed air is supplied to the second cylinder **52** from an air supply path (not shown) for the second cylinder **52**. The compressed air supplied or discharged causes the cylinder rod **52a** of the second cylinder **52** to extend and retract. The supply or discharge of compressed air to the second cylinder **52** is controlled by the solenoid valve **55b** provided in the air supply path. The rear end portion (the distal end portion) of the cylinder rod **52a** is connected to the support base **53**.

The axial force with which the first cylinder **51** extends the cylinder rod **51a** is adjusted to a predetermined force by the pressure reducing valve **56a** provided in the air supply path. The pressure reducing valve **56a** is configured to be capable of adjusting the pressure of the compressed air supplied to the first cylinder **51**. The axial force with which the second cylinder **52** extends the cylinder rod **52a** is adjusted to a predetermined force by the pressure reducing valve **56b** provided in the air supply path. Here, the axial force with which the second cylinder **52** extends the cylinder rod **52a** is set to be greater than the axial force with which the first cylinder **51** extends the cylinder rod **51a**.

The moving device **60** is configured to be capable of supporting the gripping device **30** and moving the gripping device **30** in the front-rear direction along the axis **Ax** of the gripping clamp **40**. The first clamp jaw **41** and the second clamp jaw **42** as gripping members for gripping the drain wire **2** are moved in the front-rear direction by the moving device **60**. As shown in FIG. **1**, the moving device **60** includes a moving base **61**, a linear guide **62**, a ball screw **63**, a nut **64** and a first motor **65**.

The moving base **61** has a gripping device **30** thereon. The moving base **61** supports the gripping device **30**. The moving base **61** is slidably engaged with the linear guide **62**. The linear guide **62** extends in the front-rear direction. The moving base **61** is configured to be movable in the front-rear direction along the linear guide **62**. As the moving base **61** moves in the front-rear direction, the gripping device **30** moves in the front-rear direction. The nut **64** is connected to the moving base **61**.

The ball screw **63** meshes with the nut **64**. The ball screw **63** is arranged so that the axis is oriented in the front-rear direction. The front end of the ball screw **63** is connected to the first motor **65**. When the first motor **65** is driven, the ball screw **63** rotates around the axis. As the ball screw **63** rotates around the axis, the moving base **61** moves along the linear guide **62** via the nut **64** meshed with the ball screw **63**. The moving device **60** can change the speed at which the gripping device **30** is moved in the front-rear direction by changing the rotation speed of the first motor **65**.

The rotating device **70** is a mechanism for rotating the gripping clamp **40** around the axis **Ax**. The first clamp jaw **41** and the second clamp jaw **42** as gripping members that grip the drain wire **2** are rotated around the axis **Ax** by the rotating device **70**. The rotating device **70** is mounted on the moving base **61** of the moving device **60** together with the gripping device **30**. The rotating device **70** moves in the front-rear direction together with the gripping device **30**. As shown in FIG. **1**, the rotating device **70** includes a second motor **71**, a motor-side pulley **72**, a clamp-side pulley **73** and a timing belt **74**.

The second motor **71** is provided upward relative to the gripping clamp **40**. The main shaft of the second motor **71** extends in the front-rear direction. The main shaft of the second motor **71** rotates around an axis parallel to the axis **Ax** of the gripping clamp **40**. The motor-side pulley **72** is connected to the main shaft of the second motor **71**. The clamp-side pulley **73** is connected to gripping clamp **40**. The timing belt **74** is an endless belt and is wound around the motor-side pulley **72** and the clamp-side pulley **73**. The rotational force of the second motor **71** is transmitted to the gripping clamp **40** via the motor-side pulley **72**, the timing belt **74** and the clamp-side pulley **73**. When the second motor **71** is driven, the gripping clamp **40** rotates around the axis **Ax**. The rotating device **70** may be configured to be capable of changing the speed at which the gripping device **30** is rotated by changing the rotational speed of the second motor **71**.

As shown in FIG. **1**, the drain wire correcting device **10** includes a controller **80**. The controller **80** controls the retention device **20**, the drive device **50** of the gripping device **30**, the moving device **60** and the rotating device **70**. The controller **80** is connected to the actuator **22**, the solenoid valve **55a** for the first cylinder **51**, the solenoid valve **55b** for the second cylinder **52**, the first motor **65** and the second motor **71**, and controls their operation.

There is no particular limitation on the configuration of the controller **80**. For example, the controller **80** may be equipped with a central processing unit (hereinafter referred to as "CPU"), a ROM storing therein programs and the like to be executed by the CPU, a RAM, etc. Each section of the controller **80** may be implemented as software or implemented as hardware. Each section may be a processor or may be a circuit. The controller **80** may be, for example, a programmable controller, a computer, or the like. How the operation of each section is controlled by the controller **80** will be described in the following description of the process of correcting the drain wire **2**.

### [Drain wire correcting process]

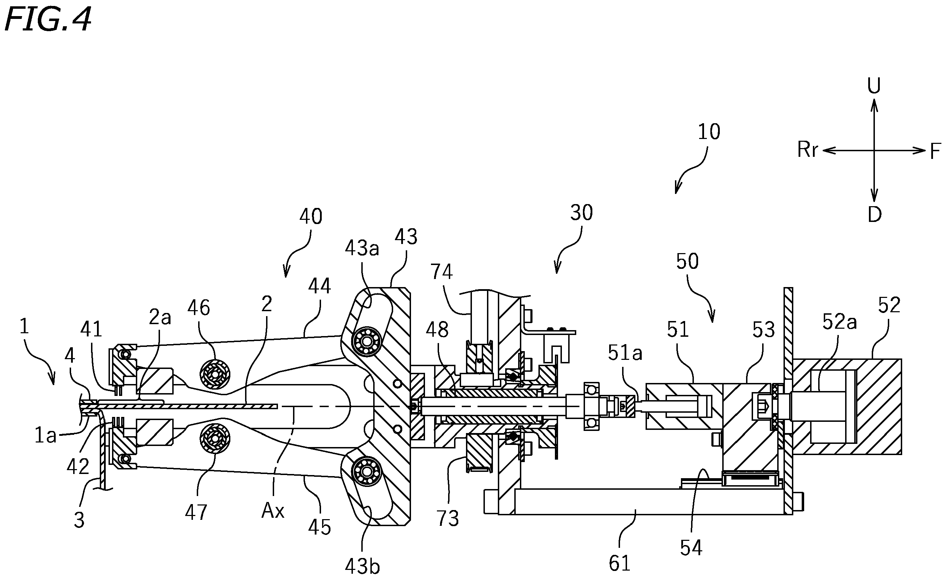

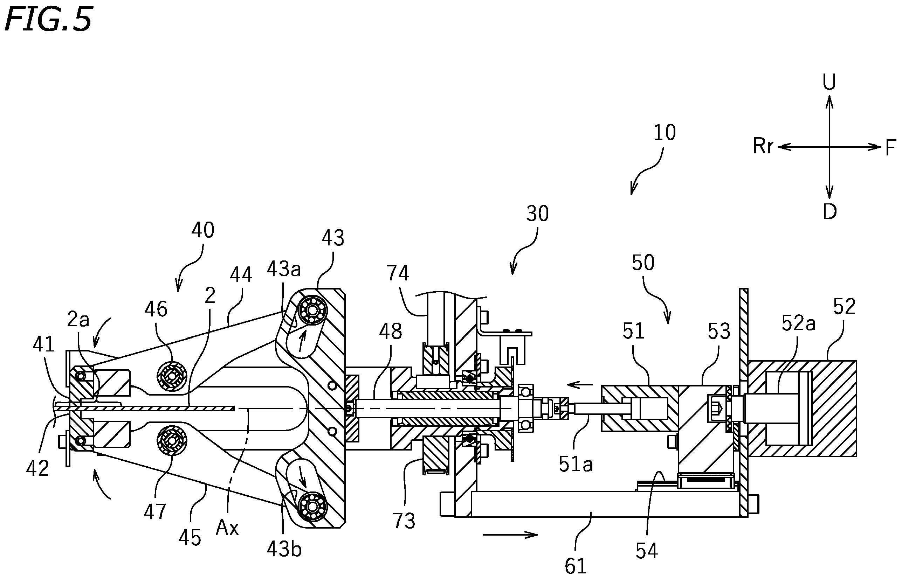

The process of correcting the drain wire **2** will be described below. FIG. **4** is a cross-sectional view of the main part of the drain wire correcting device **10** immediately before starting to correct the drain wire **2**. FIG. **4** does not show some of the members. This similarly applies also to FIG. **5** to FIG. **9**. As shown in FIG. **4**, before starting to correct the drain wire **2**, the drain wire correcting device **10** drives the moving device **60** (see FIG. **1**) to move the gripping device **30** rearward. Thus, substantially the entire drain wire **2** is moved forward relative to the first clamp jaw **41** and the second clamp jaw **42**. Immediately before starting to correct the drain wire **2**, substantially the entire drain wire **2** is contained in the space between the first link member **44** and the second link member **45**. Note that while it is the gripping device **30** that actually moves in the above description, the change in the positional relationship between different members may be expressed, as needed, also as the movement of a member that does not actually move. As shown in FIG. **4**, the first clamp jaw **41** and the second clamp jaw **42** are separated from each other at this time. The state in which the first clamp jaw **41** and the second clamp jaw **42** are separated will hereinafter be referred to also as the gripping clamp **40** being open.

When the correcting of the drain wire **2** is started, the drain wire correcting device **10** first controls the drive device **50** of the gripping device **30** to mesh together the first clamp jaw **41** and the second clamp jaw **42**. Thus, the first clamp jaw **41** and the second clamp jaw **42** grip the drain wire **2** on the axis **Ax** of the gripping clamp **40**. FIG. **5** is a cross-sectional view of the main part of the drain wire correcting device **10** at the start of correcting the drain wire **2**. As shown in FIG. **5**, at this time, the cylinder rod **51a** of the first cylinder **51** is extended. The cylinder rod **51a** is pushing the piston rod **48** toward the rear side. The piston rod **48** is moved more rearward from the state shown in FIG. **4**.

As the piston rod **48** moves rearward, the cam plate **43** connected to the piston rod **48** also moves rearward. As shown in FIG. **4** and FIG. **5**, as the cam plate **43** moves rearward, the rear end portions of the first link member **44** and the second link member **45** move outward in the radial direction of the gripping clamp **40** along the first long hole **43a** and the second long hole **43b**, respectively. Thus, the first link member **44** and the second link member **45** rotate around the first rotation axis **46** and the second rotation axis **47**, respectively. Thus, the first clamp jaw **41** and the second clamp jaw **42** provided at the rear end portions of the first link member **44** and the second link member **45**, respectively, move inward in the radial direction of the gripping clamp **40**. As a result, the first clamp jaw **41** and the second clamp jaw **42** grip the drain wire **2**.

In the state shown in FIG. **5**, the drain wire **2** is gripped by the first gripping portion **41b** (see FIG. **3**) of the first clamp jaw **41** and the second gripping portion **42b** (see FIG. **3**) of the second clamp jaw **42**. Even if the drain wire **2** is not positioned between the first gripping portion **41b** and the second gripping portion **42b** while the first clamp jaw **41** and the second clamp jaw **42** are coming close to each other, the drain wire **2** is guided between the first gripping portion **41b** and the second gripping portion **42b** by the oblique sides of the comb teeth **41a1**, **41a2**, **42a1** or **42a2**. As shown in FIG. **5**, at this point, the first clamp jaw **41** and the second clamp jaw **42** grip a root portion **2a** of the drain wire **2**. Here, the root portion **2a** of the drain wire **2** means, for example, a portion that is closer to the sheathed portion **1a** than one third of the exposed length of the drain wire **2** in the axial direction, and more preferably, a portion that is closer to the sheathed portion **1a** than one fifth of the exposed length of the drain wire **2** in the axial direction.

As shown in FIG. **5**, in this state, the gripping force of the gripping clamp **40** is generated by the driving force of the first cylinder **51**. Hereinafter, the gripping of the drain wire **2** by the driving force of the first cylinder **51** will be referred to also as "weak grip", and such a gripping action of the drain wire **2** will be referred to also as "to weakly grip". The degree of gripping force in the case of the weak grip will be described below.

In the state shown in FIG. **5**, the first gripping portion **41b** and the second gripping clamp **42b** are in contact with the drain wire **2** with respect to the direction in which the first clamp jaw **41** and the second clamp jaw **42** move toward and away from each other. As the first meshing portion **41a** and the second meshing portion **42a** mesh with each other, the first clamp jaw **41** and the second clamp jaw **42** stop by hitting the drain wire **2** for the direction in which the first clamp jaw **41** and the second clamp jaw **42** move toward and away from each other. The first gripping portion **41b** and the second gripping portion **42b** are notched in a shape corresponding to the cross-sectional shape of the drain wire **2**. Therefore, the first clamp jaw **41** and the second clamp jaw **42** are in contact with or at least close to the drain wire **2** for directions except for the direction in which the first clamp jaw **41** and the second clamp jaw **42** move toward and away from each other.

In the next step, with the first clamp jaw **41** and the second clamp jaw **42** in contact with the drain wire **2**, the moving device **60** is driven to move the first clamp jaw **41** and the second clamp jaw **42** toward the distal end side (herein, forward) of the drain wire **2**. The control in the previous step of bringing the first clamp jaw **41** and the second clamp jaw **42** into contact with the drain wire **2**, and the control in this step will hereinafter be collectively referred to also as "squeeze control". The controller **80** according to the present embodiment controls the drive device **50** and the moving device **60** to perform the squeeze control.

In the squeeze control, the first gripping portion **41b** of the first clamp jaw **41** and the second gripping portion **42b** of the second clamp jaw **42** move along the axis **Ax** of the gripping clamp **40** while being in contact with the outer circumference of the drain wire **2** (specifically, while weakly gripping the drain wire **2**). Thus, the drain wire **2** is squeezed toward the distal end side, thereby organizing a plurality of strands of the drain wire **2**. As a result of the squeeze, the drain wire **2** is shaped straight. At this time, the first clamp jaw **41** and the second clamp jaw **42** are weakly gripping the drain wire **2**. Therefore, when moving the gripping clamp **40** along the drain wire **2**, there is easily slippage between the first clamp jaw **41** and the second clamp jaw **42** and the drain wire **2**. The gripping force of the gripping clamp **40** while weakly gripping is set to such a gripping force that there is easily slippage between the first clamp jaw **41** and the second clamp jaw **42** and the drain wire **2** and the drain wire **2** is not pulled excessively.

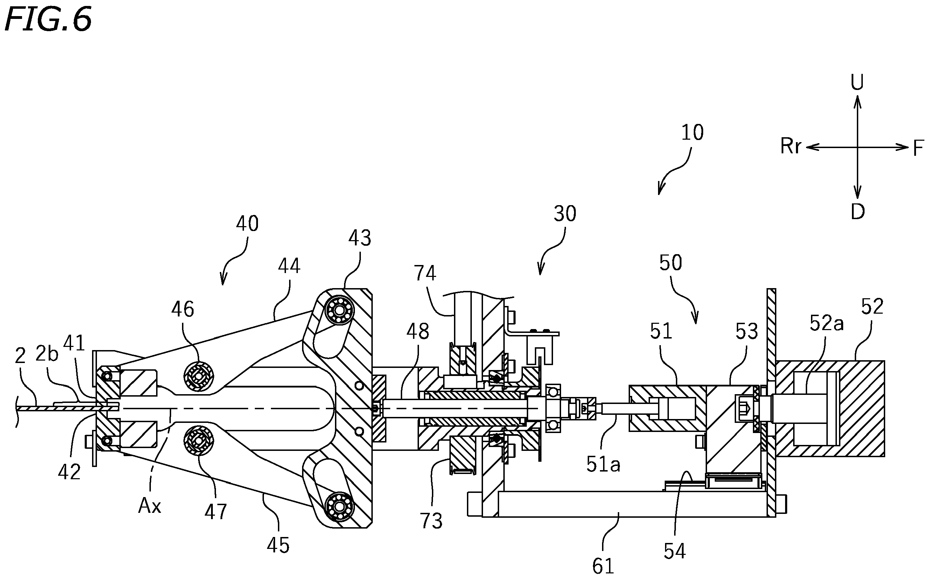

FIG. **6** is a cross-sectional view of the main part of the drain wire correcting device **10** at the end of a squeeze control. As shown in FIG. **6**, in the squeeze control, the gripping device **30** is moved until the first clamp jaw **41** and the second clamp jaw **42** reach the distal end portion **2b** of the drain wire **2**. The distal end portion **2b** of the drain wire **2** herein means, for example, a portion that is closer to the distal end than one third of the exposed length of the drain wire **2** in the axial direction, and more preferably, a portion that is closer to the distal end than one fifth of the exposed length of the drain wire **2** in the axial direction. As the squeezing of the drain wire **2** by the squeeze control is performed from the root portion **2a** to the distal end portion **2b** of the drain wire **2**, the strands of the substantial portion of the drain wire **2** are organized and shaped straight.

In the next step, the drain wire **2** is gripped by the first clamp jaw **41** and the second clamp jaw **42** with the gripping force increased from that during the squeeze control. Further in the next step, the rotating device **70** is driven to rotate the first clamp jaw **41** and the second clamp jaw **42**, gripping the drain wire **2**, around the axis **Ax** of the gripping clamp **40**. The control of making the first clamp jaw **41** and the second clamp jaw **42** strongly grip the drain wire **2**, and the control of rotating the first clamp jaw **41** and the second clamp jaw **42** will hereinafter be collectively referred to also as "rotation control". The controller **80** is configured to execute the rotation control after the squeeze control. The controller **80** executes the rotation control with the first clamp jaw **41** and the second clamp jaw **42** positioned at the distal end portion **2b** of the drain wire **2**.

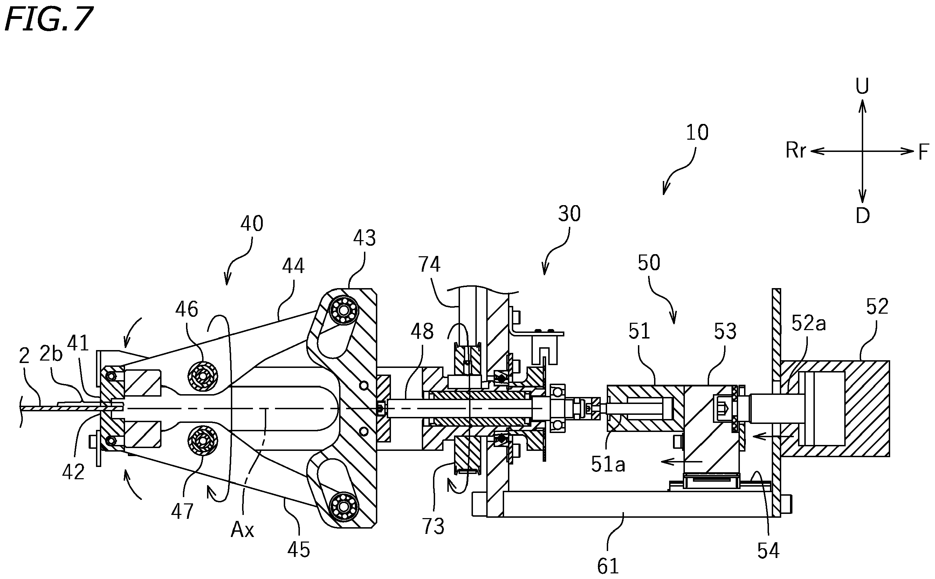

FIG. **7** is a cross-sectional view of the main part of the drain wire correcting device **10** during the rotation control. As shown in FIG. **7**, the cylinder rod **52a** of the second cylinder **52** is extended at this time. The support base **53** is pushed by the second cylinder **52** and is moved rearward relative to the state shown in FIG. **4** to FIG. **6**, in other words, the weak grip state. The second cylinder **52** is pressing the first cylinder **51** rearward via the support base **53**. As a result, the second cylinder **52** presses the piston rod **48** rearward via the first cylinder **51**. The gripping force of the gripping clamp **40** at this time is generated by the driving force of the second cylinder **52**.

The axial force of the second cylinder **52** is set to be greater than the axial force of the first cylinder **51**. Therefore, in the state shown in FIG. **7**, the gripping force by which the first clamp jaw **41** and the second clamp jaw **42** grip the drain wire **2** is greater than that in the state shown in FIG. **4** to FIG. **6** (the weakly gripping state). Hereinafter, the gripping of the drain wire **2** by the driving force of the second cylinder **52** will be referred to also as "strong grip" and such a drain wire **2** gripping action will be referred to also as "to strongly grip". Note that the first cylinder **51** may be driven or may not be driven at this time.

The rotation control further rotates the first clamp jaw **41** and the second clamp jaw **42**, gripping the drain wire **2**, around the axis **Ax** of the gripping clamp **40**. When rotating the first clamp jaw **41** and the second clamp jaw **42**, the second motor **71** (see FIG. **2**) of the rotating device **70** is driven. The first clamp jaw **41** and the second clamp jaw **42**, strongly gripping the drain wire **2**, rotate around the axis **Ax**, thereby twisting the drain wire **2**. The gripping force of the gripping device **30** gripping strongly is set to such a gripping force that there is no slippage between the first clamp jaw **41** and the second clamp jaw **42** and the drain wire **2** when the gripping clamp **40** is rotated. This allows the drain wire **2** to be twisted the same number of times as the number of times set in the controller **80**. In addition, by tightening the drain wire **2** by the rotation control, it is possible to stably retain the shape of the drain wire **2** formed straight by the squeeze control. The rotation control can correct a portion of the drain wire **2** that is on the sheathed portion **1a** side than the portion gripped by the first clamp jaw **41** and the second clamp jaw **42**.

In the rotation control, the controller **80** may drive the moving device **60** so that the first clamp jaw **41** and the second clamp jaw **42** pull the drain wire **2** toward the distal end side. The driving force of the moving device **60** at this time should be such that the gripping clamp **40** does not move forward. Note however that the gripping clamp **40** may move against the drain wire **2** by the driving force of the moving device **60** in the rotation control. In the present embodiment, the moving device **60** is not driven in the rotation control, and the first clamp jaw **41** and the second clamp jaw **42** do not actively pull the drain wire **2** toward the distal end side, but the twisting urges the drain wire **2** to shrink, resulting in a tension on the drain wire **2** that pulls toward the distal end side.

In the next step, the gripping force of the first clamp jaw **41** and the second clamp jaw **42** is switched to a gripping force that is weaker than the gripping force in the rotation control. Here, the gripping of the first clamp jaw **41** and the second clamp jaw **42** is switched to the same weak grip as that in the squeeze control. Note however that the gripping force of the gripping clamp **40** at this time may be a third gripping force that is set to be weaker than that in the rotation control. The drain wire correcting device **10** may be configured so that the gripping force of the gripping clamp **40** can be set to the third gripping force. Further, in the next step, the first clamp jaw **41** and the second clamp jaw **42** are moved along the axis **Ax** toward the distal end side of the drain wire **2** while being rotated around the axis **Ax** of the gripping clamp **40**. This releases the first clamp jaw **41** and the second clamp jaw **42** from the drain wire **2**. Hereafter, these two control steps are will be referred to collectively as the "release control". The controller **80** is configured to execute the release control after the rotation control.

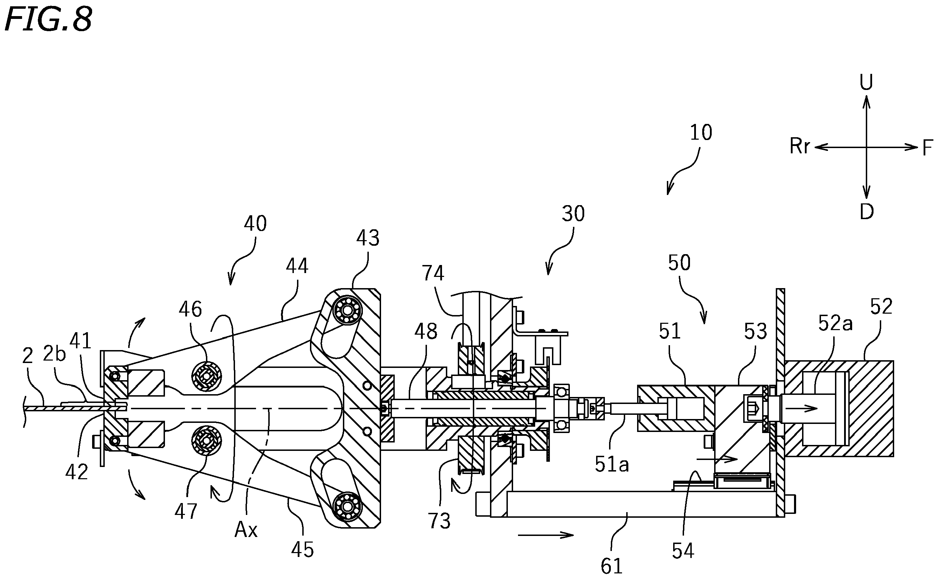

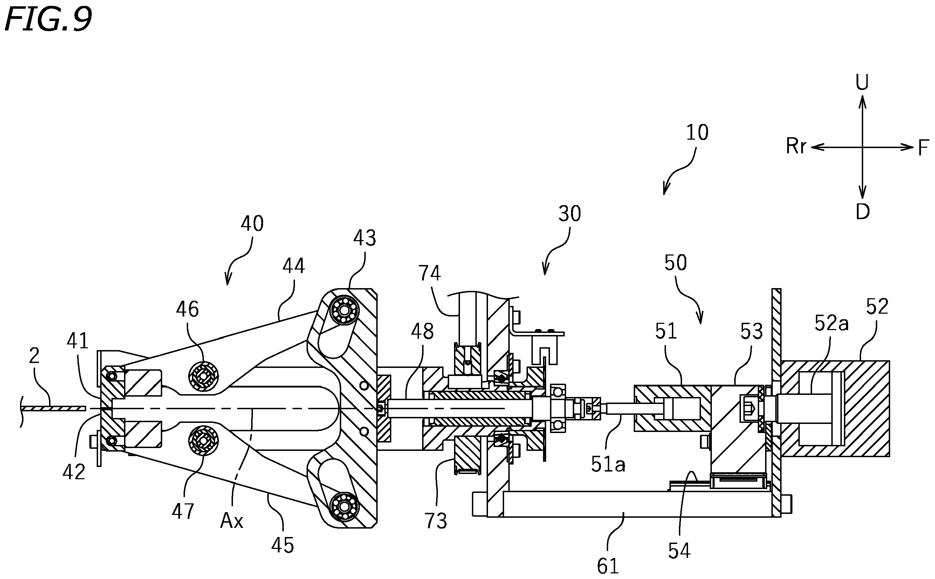

FIG. **8** is a cross-sectional view of the main part of the drain wire correcting device **10** at the start of the release control. FIG. **9** is a cross-sectional view of the main part of the drain wire correcting device **10** at the end of the release control. As shown in FIG. **8**, in the release control, as in the squeeze control, the gripping clamp **40** is driven by the first cylinder **51** and the second cylinder **52** is not used. Thus, the gripping clamp **40** weakly grips the drain wire **2**. In the release control, the gripping clamp **40** is rotated around the axis **Ax**. Moreover, in the release control, the gripping clamp **40** is moved toward the distal end side of the drain wire **2**.

In the release control, the first clamp jaw **41** and the second clamp jaw **42** twist the drain wire **2** while slipping slightly against the drain wire **2**, and move the position at which the drain wire **2** is gripped toward the distal end side the drain wire **2**. While the position at which the drain wire **2** is gripped by the first clamp jaw **41** and the second clamp jaw **42** is the starting point for correcting the drain wire **2**, part of the drain wire **2** that is at the gripping position or on the distal end side relative to the gripping position is not corrected. Therefore, in the release control, the gripping position of the drain wire **2** is moved to the distal end side while twisting the drain wire **2**. This gradually reduces the uncorrected portion of the drain wire **2**. As shown in FIG. **9**, when the first clamp jaw **41** and the second clamp jaw **42** are released from the drain wire **2**, the entire drain wire **2** will have been corrected.

In the release control, the drain wire **2** is gripped weakly so that the drain wire **2** is not pulled excessively as the gripping clamp **40** moves. In the release control, it is preferred that the rotation speed and the moving speed of the gripping clamp **40** are associated with each other in order to control the number of times the drain wire **2** is twisted. Therefore, in the release control, the gripping clamp **40** is moved at a slower speed than in the squeeze control. In the squeeze control, the gripping clamp **40** is moved at a higher speed than in the release control, because the rotation speed and the moving speed of the gripping clamp **40** do not need to be associated with each other.

### [Functions/effects of embodiment]

Hereinbelow, the functions and effects of the drain wire correcting device **10** according to the present embodiment will be described, including the findings obtained by the present inventors in the process of arriving at the process of correcting the drain wire **2** described above.

With the drain wire correcting device **10** according to the present embodiment, the squeeze control is executed to move the first clamp jaw **41** and the second clamp jaw **42** toward the distal end side of the drain wire **2**, with the first clamp jaw **41** and the second clamp jaw **42** as gripping members being in contact with the drain wire **2**. After the squeeze control, the rotation control is executed, in which the first clamp jaw **41** and the second clamp jaw **42** are caused to grip the drain wire **2** with a stronger gripping force than during the squeeze control while the first clamp jaw **41** and the second clamp jaw **42** are rotated around the axis **Ax** of the gripping clamp **40** (in other words, around the axis of the drain wire **2** after the squeeze control). With such a drain wire correcting device **10**, in the squeeze control, the strands of the drain wire **2** can be organized and the drain wire **2** can be shaped straight. Furthermore, in the rotation control performed after the squeeze control, the gripping clamp **40** is rotated while the drain wire **2** is gripped more strongly than in the squeeze control. Therefore, by the rotation control, it is possible to tightly twist the drain wire **2**.

In the squeeze control, the first clamp jaw **41** and the second clamp jaw **42** grip the drain wire **2** more weakly than in the rotational control. Therefore, even if the first clamp jaw **41** and the second clamp jaw **42** are moved toward the distal end side of the drain wire **2** in the squeeze control, the drain wire **2** is not pulled so strongly. Therefore, the strands of the drain wire **2** are less likely to break.

Where a drain wire is not corrected, for example, several problems arise when attempting to insert the drain wire into a heat-shrink tube. A drain wire that has not been corrected still has kinks from when it was twisted in the sheath, and unless these kinks are corrected, it is difficult to insert the drain wire into the heat-shrink tube. Moreover, strands of a drain wire that has not been corrected are scattered, and if they are not organized, it is difficult to insert the drain wire into the heat-shrink tube. Furthermore, when a force in the axial direction is applied while inserting an uncorrected drain wire into a heat-shrink tube, the drain wire buckles easily. Therefore, it is preferable that the drain wire be shaped straight and be tightly twisted (corrected).

According to the findings of the present inventors, when correcting the drain wire, if the root portion of the drain wire is first gripped by the gripping member and then the gripping member is rotated while moving the gripping member toward the distal end side of the drain wire, strands that were separated from, and not organized with, other strands are likely to be wound around the outer circumference of the twisted wire of the other strands. Those strands that are wound around the outer circumference of the twisted wire are likely to cause problems in subsequent processes. Specifically, for example, strands wound around the outer circumference cause unevenness on the outer circumference of the drain wire, which is likely to increase the insertion resistance when inserting the heat-shrink tube to the drain wire. Furthermore, for example, the strands wound around the outer circumference are shorter than other strands, which is likely to cause defects when crimping a crimp terminal to the drain wire. When the drain wire is twisted while moving the grip portion, the drain wire is not twisted tightly because of the slippage between the drain wire and the gripping member. Therefore, the drain wire is likely to buckle. Therefore, according to the findings of the present inventors, it is preferred that the drain wire is twisted after squeezing the drain wire and organizing strands.

Furthermore, according to the findings of the present inventors, if the drain wire is only squeezed and not twisted, the strands, especially in the distal end portion of the drain wire, are likely not to be organized but remain scattered. If the drain wire is only twisted but not squeezed, kinks of the drain wire are likely to remain uncorrected.

The drain wire correcting device **10** according to the present embodiment is set to execute the rotation control after executing the squeeze control. Therefore, problems described above can be suppressed. Furthermore, the drain wire correcting device **10** according to the present embodiment executes the rotation control while the first clamp jaw **41** and the second clamp jaw **42** are positioned at the distal end portion **2b** of the drain wire **2**. Therefore, it is possible to twist the drain wire **2** while most of the drain wire **2** has been squeezed. Therefore, it is possible to more desirably correct the drain wire **2**.

According to the findings of the present inventors, if the gripping force of the gripping member is made strong when squeezing the drain wire, the strands of the drain wire are likely to be broken due to excessive pulling. Or the drain wire is likely to be damaged. With the drain wire correcting device **10** according to the present embodiment, the gripping force by which the gripping clamp **40** grips the drain wire **2** during the squeeze control is set to be weaker than the gripping force by which the gripping clamp **40** grips the drain wire **2** during the rotation control. Therefore, it is possible to suppress the problem of the strands of the drain wire **2** being broken or the drain wire **2** being damaged. In the rotation control, the drain wire **2** is gripped more strongly than in the squeeze control, and it is therefore possible to tightly twist the drain wire **2** by the rotation control.

In the present embodiment, in the squeeze control, the controller **80** causes the first clamp jaw **41** and the second clamp jaw **42** to grip the drain wire **2** with a weaker gripping force than in the rotation control. In other words, in the squeeze control, the controller **80** does not bring the first clamp jaw **41** and the second clamp jaw **42** to a state where the first clamp jaw **41** and the second clamp jaw **42** are only in contact with, but do not grip, the drain wire **2**. Thus, the drain wire **2** is pulled toward the distal end side by the first clamp jaw **41** and the second clamp jaw **42**. Therefore, the drain wire **2** can be more desirably shaped straight.

Furthermore, in the present embodiment, the controller **80** starts the squeeze control when the first clamp jaw **41** and the second clamp jaw **42** are positioned at the root portion **2a** of the drain wire **2**. With such a configuration, since the squeeze control starts from the root portion **2a** of the drain wire **2**, where the strands have been relatively organized already before the correction, it is possible to desirably organize the drain wire **2**. With such a squeeze control, most of the drain wire **2** from the root portion **2a** to the distal end portion **2b** can be squeezed.

With the drain wire correcting device **10** according to the present embodiment, in the release control after the rotation control, the controller **80** causes the first clamp jaw **41** and the second clamp jaw **42** to grip the drain wire **2** with a weaker gripping force than in the rotation control, and are rotated around the axis **Ax** of the gripping clamp **40**. Furthermore, the controller **80** moves the first clamp jaw **41** and the second clamp jaw **42** toward the distal end side of the drain wire **2**, thereby releasing the first clamp jaw **41** and the second clamp jaw **42** from the drain wire **2**. With such a release control, by moving, while rotating, the first clamp jaw **41** and the second clamp jaw **42**, the portion of the drain wire **2** that is not twisted in the rotation control, i.e., the grip portion that is gripped by the first clamp jaw **41** and the second clamp jaw **42** and a portion on the distal end side relative to the grip portion, can also be twisted. Furthermore, since the release control is performed until the first clamp jaw **41** and the second clamp jaw **42** come off the drain wire **2**, the drain wire **2** can be twisted to the distal end thereof by the release control. The gripping force of the gripping clamp **40** during the release control is weaker than that during the rotation control. Therefore, it is possible to suppress the problem of the strands of the drain wire **2** being broken.

With the drain wire correcting device **10** according to the present embodiment, the moving speed of the first clamp jaw **41** and the second clamp jaw **42** relative to the drain wire **2** in the squeeze control is faster than the moving speed of the first clamp jaw **41** and the second clamp jaw **42** relative to the drain wire **2** in the release control. Such a control saves the amount of time required for correcting the drain wire **2**.

With the drain wire correcting device **10** according to the present embodiment, the first clamp jaw **41** includes the first gripping portion **41b** that is notched in a shape corresponding to the cross-sectional shape of the drain wire **2**, and the second clamp jaw **42** includes the second gripping portion **42b** that is notched in a shape corresponding to the cross-sectional shape of the drain wire **2** and is arranged so as to face the first gripping portion **41b.** With such a configuration, the drain wire **2** is gripped by the first gripping portion **41b** and the second gripping portion **42b**, which are notched in a shape corresponding to the cross-sectional shape of the drain wire **2**. Therefore, the drain wire **2** can be easily organized in the squeeze control, and the drain wire **2** can be easily gripped in the rotation control.

Note that the controller **80** may drive the moving device **60** so that the first clamp jaw **41** and the second clamp jaw **42** pull the drain wire **2** toward the distal end side in the rotation control. In this case, since the drain wire **2** is twisted while being pulled toward the distal end side during the rotation control, the drain wire **2** can be more desirably shaped straight. Furthermore, it has been confirmed by the present inventors that such a control can increase the strength of binding of the twisted drain wire **2**.

### [Other embodiments]

One embodiment of the present invention has been described above. Note however that the embodiment above is only an example, and various other embodiments are possible. For example, in the embodiment described above, the release control is performed to release the gripping clamp **40** from the drain wire **2** while rotating the gripping clamp **40**, but the release control does not need to be performed. The present inventors have confirmed that even if the gripping clamp **40** is opened immediately after the rotation control, there is only a problem that the convergence of a portion of the drain wire **2** that is gripped by the gripping clamp **40** is slightly weak. Instead of the release control, the gripping clamp **40** may be rotated without moving the gripping clamp **40** while the drain wire **2** is weakly gripped. Also in this case, there is slippage between the drain wire **2** and the first clamp jaw **41** and the second clamp jaw **42**, and it is possible to twist a portion of the drain wire **2** that has not been twisted since it has been gripped by the first clamp jaw **41** and the second clamp jaw **42** in the rotation control.

Although the gripping clamp **40** does not rotate in the squeeze control in the embodiment described above, the gripping clamp **40** may rotate. Although the gripping clamp **40** weakly grips the drain wire **2** in the squeeze control in the embodiment described above, the gripping clamp **40** may only be in contact with the drain wire **2** and not grip the drain wire **2**.

The configuration of the drain wire correcting device is not limited to those described above. For example, the drain wire correcting device may rotate the multi-core cable retained by the retention device around a predetermined axis instead of the gripping device. Alternatively, the drain wire correcting device may rotate both the gripping device and the multi-core cable around a predetermined axis, thereby rotating the drain wire relative to the sheathed portion of the multi-core cable. Similarly, the drain wire correcting device may move the multi-core cable retained by the retention device, but not the gripping device, in the axial direction of the gripping device. Alternatively, the drain wire correcting device may be configured to move both the gripping device and the multi-core cable in the axial direction of the gripping device, thereby squeezing the drain wire toward the distal end side.

Other than the above, unless otherwise specified, the embodiment described above does not limit the present invention. For example, the gripping force of the gripping device may be switched by switching the pressure of the air supplied to one air cylinder. The actuator of the gripping device does not need to be an air-driven actuator. There is no particular limitation on the configuration of the gripping device as long as the gripping force can be switched between strong and weak. There is also no limitation on the retention device, the moving device and the rotating device.

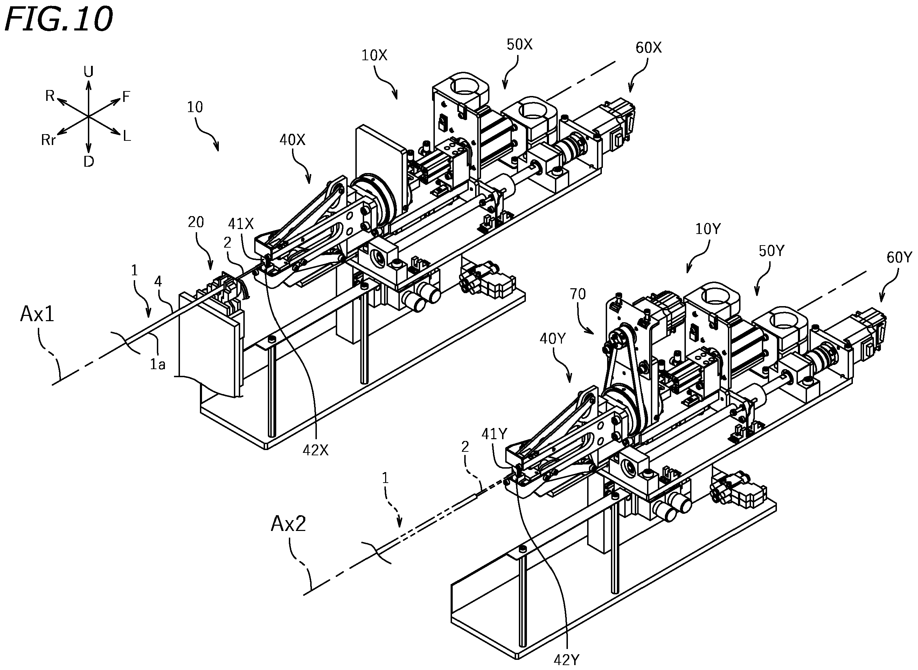

According to another suitable embodiment, the drain wire correcting device may be divided into a device for performing the squeeze control and a device for performing the rotating control and the release control. FIG. **10** is a perspective view of the drain wire correcting device **10**, which is divided into a squeeze device **10X** and a twist device **10Y**. As shown in FIG. **10**, in this embodiment, the squeeze device **10X** and the twist device **10Y** are installed side by side. Although not shown in the figures, the retention device **20**, which retains the multi-core cable **1**, is configured to move or swivel to hand over the multi-core cable **1** that has been processed by the squeeze device **10X** to the twist device **10Y** (the multi-core cable **1** after being moved is shown by a two-dot-chain line). The operation of the retention device **20**, the squeeze device **10X** and the twist device **10Y** is controlled by the controller **80** (see FIG. **1**). The controller **80** may be arranged distributed among the retention device **20**, the squeeze device **10X** and the twist device **10Y**, or it may be centralized in one location.

As shown in FIG. **10**, the squeeze device **10X** includes a first gripping clamp **40X**, a first drive device **50X** and a first moving device **60X**. The configuration of the first gripping clamp **40X**, the first drive device **50X** and the first moving device **60X** may be similar to the configuration of the gripping clamp **40**, the drive device **50** and the moving device **60**, respectively, of the embodiment described first. The first drive device **50X** drives the clamp jaws **41X** and **42X** of the first gripping clamp **40X** so as to grip or release the drain wire **2.** The first drive device **50X** is configured to at least allow the first gripping clamp **40X** to weakly grip the drain wire **2.** The gripping force of the first gripping clamp **40X** generated by the first drive device **50X** does not need to be changeable from the gripping force of the weak grip. The first moving device **60X** is configured to move the first gripping clamp **40X** along the axis **Ax.** Thus, the first moving device **60X** moves the first gripping clamp **40X** away from the sheathed portion **1a** of the multi-core cable **1.** The operation of the squeeze control by the squeeze device **10X** may be the same as in the first embodiment. Alternatively, the squeeze control by the squeeze device **10X** may squeeze up to the distal end of the drain wire **2.** Note that while the squeeze device **10X** does not include a rotating device in this embodiment, it may include a rotating device and perform the squeeze control while rotating the first gripping clamp **40X.**

In this embodiment, the gripping device **10X** does not need to strongly grip the drain wire **2.** Therefore, the gripping device **10X** may include a squeezing member (e.g., a squeezing jaw) that comes into contact with the drain wire **2** so as to surround the drain wire **2**, instead of a first gripping clamp **40X** that grips the drain wire **2**. Such a squeezing member may be configured to be non-movable in a direction toward or away from the drain wire **2.** Needless to say, the squeezing device **10X** may, as in this embodiment, include a gripping member that is provided so as to surround the drain wire **2** and that comes into contact with or comes apart from the drain wire **2** by the drive by the drive device.

After completion of the squeeze control by the squeeze device **10X**, the multi-core cable **1** is carried to the twist device **10Y.** As shown in FIG. **10**, the twist device **10Y** includes a second gripping clamp **40Y**, a second drive device **50Y**, a second moving device **60Y** and a rotating device **70.** The configuration of the twist device **10Y** may be similar to that of the drain wire correcting device **10** first described. The second drive device **50Y** drives clamp jaws **41Y** and **42Y** of the second gripping clamp **40Y** so as to grip or release the drain wire **2.** The second drive device **50Y** is configured to at least cause the second gripping clamp **40Y** to strongly grip the drain wire **2**. The gripping force of the second gripping clamp **40Y** generated by the second drive device **50Y** does not need to be changeable from the gripping force of the strong grip. The second moving device **60Y** is configured to move the second gripping clamp **40Y** along the axis **Ax2.** The axis **Ax2** is the rotating axis of the second gripping clamp **40Y**, and the direction of extension coincides with the axial direction of the squeezed drain wire **2** attached to the twist device **10Y.** The rotating device **70** rotates the second gripping clamp **40Y** around the axis **Ax2.** The operation of the rotation control by the twist device **10Y** may be the same as in the first embodiment. The twist device **10Y** may be set to perform the release control or not to perform the release control. When the release control is not performed, the twist device **10Y** may not include the second moving device **60Y**.

The drain wire correcting device **10** uses a plurality of clamps for gripping the drain wire **2** with different gripping forces, instead of using a clamp capable of switching the gripping force for gripping the drain wire **2**. Such a drain wire correcting device **10** also allows for desirable correction of the drain wire **2** by preventing the strands of the drain wire **2** from being cut or from being twisted insufficiently for the same reasons as in the first embodiment.

The retention device for retaining the drain wire may include a multi-jointed robot arm, for example. When a multi-jointed robot arm is used as a retention device of a drain wire correcting device, which is divided between a squeeze device and a twist device as described above, the robot arm may, for example, carry a multi-core cable from another device to the squeeze device, carry the multi-core cable from the squeeze device to the twist device, carry the multi-core cable from the twist device to another device. When a multi-jointed robot arm is used as a retention device of a drain wire correcting device as in the first embodiment, the robot arm may, for example, carry a multi-core cable from another device to the drain wire correcting device, carry the multi-core cable from the drain wire correcting device to another device, etc. In the case of any of the applications to the drain wire correcting device described above, the relative movement of the gripping clamp and the multi-core cable in the squeeze control, the rotation of the multi-core cable in the rotation control, the relative movement of the gripping clamp and the multi-core cable and the rotation of the multi-core cable in the release control may be performed by the movement of the robot arm.

The correcting of the drain wire may be performed without using the drain wire correcting device. For example, the correcting of the drain wire may be performed using a gripper capable of gripping the drain wire and capable of changing the gripping force. In this case, the operator may hold the gripper in his hand to perform the correcting operation of the drain wire. The portion of the gripper that grips the drain wire may be rotatable. There are no particular limitations on devices, tools, instruments, etc., for implementing the method for correcting the drain wire disclosed herein.

### DESCRIPTION OF REFERENCE SIGNS

- 1: Multi-core cable
- 2: Drain wire
- 2a: Root portion
- 2b: Distal end portion
- 3: Core wire
- 4: Sheath
- 10: Drain wire correcting device
- 20: Retention device
- 30: Gripping device
- 40: Gripping clamp
- 41: First clamp jaw (first clamp)
- 41b: First gripping portion
- 42: Second clamp jaw (second clamp)
- 42b: Second gripping portion
- 50: Drive device
- 60: Moving device
- 70: Rotating device
- 80: Controller

## Claims

1. A drain wire correcting device, comprising:
a retention device configured to retain a sheathed portion of a multi-core cable, the multi-core cable including the sheathed portion covered with a sheath and a drain wire exposed from the sheathed portion;
a gripping member configured to be capable of gripping the drain wire on a predetermined axis;
a drive device configured to drive the gripping member so as to grip or release the drain wire;
a moving device configured to move at least one of the multi-core cable retained by the retention device and the gripping member along the axis;
a rotating device configured to rotate at least one of the multi-core cable retained by the retention device and the gripping member around the axis; and
a controller configured to control the drive device, the moving device and the rotating device,
wherein the controller is configured to execute:
a squeeze control of moving the gripping member along the axis relative to the multi-core cable while the gripping member is in contact with the drain wire, thereby squeezing the drain wire toward a distal end side; and
a rotation control, after the squeeze control, of causing the gripping member to grip the drain wire with a gripping force increased from that in the squeeze control, and rotating the gripping member around the axis relative to the sheathed portion.

2. The drain wire correcting device according to claim 1, wherein the controller is configured to, in the squeeze control, cause the gripping member to grip the drain wire with a gripping force weaker than that in the rotation control.

3. The drain wire correcting device according to claim 1 or 2, wherein the controller is configured to, in the rotation control, drive the moving device so that the gripping member pulls the drain wire toward the distal end side of the drain wire.

4. The drain wire correcting device according to any one of claims 1 to 3, wherein the controller is configured to, after the rotation control, execute a release control of causing the gripping member to grip the drain wire with a gripping force weaker than that in the rotation control, rotating the gripping member around the axis relative to the sheathed portion, and moving the gripping member along the axis toward the distal end side of the drain wire, thereby releasing the gripping member from the drain wire.

5. The drain wire correcting device according to claim 4, wherein a moving speed of the gripping member relative to the drain wire in the squeeze control is faster than a moving speed of the gripping member relative to the drain wire in the release control.

6. The drain wire correcting device according to any one of claims 1 to 5, wherein the controller executes the rotation control while the gripping member is positioned at the distal end portion of the drain wire.

7. The drain wire correcting device according to any one of claims 1 to 6, wherein the controller starts the squeeze control while the gripping member is positioned at a root portion of the drain wire.

8. The drain wire correcting device according to any one of claims 1 to 7, wherein in the squeeze control, the controller rotates the gripping member around the axis relative to the sheathed portion while moving the gripping member toward the distal end side of the drain wire while the gripping member is in contact with the drain wire.

9. The drain wire correcting device according to any one of claims 1 to 8, wherein:
the gripping member includes:
a first clamp including a first gripping portion that is notched in a shape corresponding to a cross-sectional shape of the drain wire; and
a second clamp including a second gripping portion that is notched in a shape corresponding to the cross-sectional shape of the drain wire and is arranged so as to face the first gripping portion; and
the drive device is configured to move the first clamp and the second clamp toward or away from each other.

10. A drain wire correcting device comprising:
a retention device configured to retain a sheathed portion of a multi-core cable, the multi-core cable including the sheathed portion covered with a sheath and a drain wire exposed from the sheathed portion;
a squeezing member configured to be in contact with the drain wire so as to surround the drain wire;
a gripping member configured to be capable of gripping the drain wire;
a drive device configured to drive the gripping member so as to grip or release the drain wire;
a moving device configured to move at least one of the multi-core cable retained by the retention device and the squeezing member so that the squeezing member and the sheathed portion move away from each other;
a rotating device configured to rotate at least one of the multi-core cable retained by the retention device and the gripping member around a predetermined axis; and
a controller configured to control the drive device, the moving device and the rotating device,
wherein the controller is configured to execute:
a squeeze control of moving the squeezing member relative to the multi-core cable while the squeezing member is in contact with the drain wire, thereby squeezing the drain wire toward a distal end side; and
a rotation control, after the squeeze control, of causing the gripping member to grip the drain wire, and rotating the gripping member around the axis relative to the sheathed portion.

11. The drain wire correcting device according to claim 10, wherein:
the squeezing member is configured to be capable of gripping the drain wire;
the drain wire correcting device further comprises another drive device configured to drive the squeezing member so as to grip or release the drain wire based on a control of the controller; and
in the squeeze control, the controller controls the other drive device so as to cause the squeezing member to grasp the drain wire with a gripping force weaker than the gripping force by which the gripping member grips the drain wire in the rotation control.

12. The drain wire correcting device according to claim 10 or 11, further comprising:
another moving device configured to move at least one of the multi-core cable retained by the retention device and the gripping member along the axis,
wherein the controller is configured to, after the rotation control, execute a release control of causing the gripping member to grip the drain wire with a gripping force weaker than that in the rotation control, rotating the gripping member around the axis relative to the sheathed portion, and driving the other moving device to move the gripping member along the axis toward the distal end side of the drain wire, thereby releasing the gripping member from the drain wire.

13. A method for correcting a drain wire, comprising:
a first step of retaining a sheathed portion of a multi-core cable, the multi-core cable including the sheathed portion covered with a sheath and a drain wire exposed from the sheathed portion;
a second step of causing a gripper, capable of gripping the drain wire, to come into contact with an outer circumference of the drain wire;
a third step, after the second step, of moving at least one of the retained multi-core cable and the gripper while the gripper is in contact with the outer circumference of the drain wire, thereby moving the gripper toward a distal end side of the drain wire;
a fourth step, after the third step, of causing the gripper to grip the drain wire with a gripping force of the gripper increased from that in the third step; and
a fifth step, after the fourth step, of rotating at least one of the retained multi-core cable and the gripper around an axis of the drain wire while the drain wire is gripped by the gripper, thereby rotating the gripper around the axis of the drain wire relative to the sheathed portion.

14. The method for correcting a drain wire according to claim 13, wherein in the second step, the drain wire is gripped by the gripper with a gripping force weaker than that in the fourth step and the fifth step.

15. The method for correcting a drain wire according to claim 13 or 14, further comprising:
a sixth step, after the fifth step, of gripping the drain wire by the gripper with a gripping force weaker than the gripping force in the fourth step and the fifth step; and
a seventh step, after the sixth step, of rotating at least one of the retained multi-core cable and the gripper while the drain wire is gripped by the gripper around the axis of the drain wire, thereby rotating the gripper around the axis of the drain wire relative to the sheathed portion, and moving at least one of the retained multi-core cable and the gripper in an axial direction of the drain wire to move the gripper toward the distal end side of the drain wire, thereby releasing the gripper from the drain wire.
